(19) Europäisches Patentamt
European Patent Office
Office européen des brevets

(11) **EP 1 936 852 A1**

(12) **DEMANDE DE BREVET EUROPEEN**

(43) Date de publication:
**25.06.2008 Bulletin 2008/26**

(51) Int Cl.:
*H04L 1/00* (2006.01)     *H04L 1/16* (2006.01)
*H04L 1/18* (2006.01)     *H04L 1/20* (2006.01)

(21) Numéro de dépôt: **07123402.5**

(22) Date de dépôt: **17.12.2007**

(84) Etats contractants désignés:
**AT BE BG CH CY CZ DE DK EE ES FI FR GB GR
HU IE IS IT LI LT LU LV MC MT NL PL PT RO SE
SI SK TR**
Etats d'extension désignés:
**AL BA HR MK RS**

(30) Priorité: **18.12.2006  FR 0655599**

(71) Demandeur: **COMMISSARIAT A L'ENERGIE
ATOMIQUE**
**75015 Paris (FR)**

(72) Inventeur: **Calvanese Strinati, Emilio**
**38000, GRENOBLE (FR)**

(74) Mandataire: **Ilgart, Jean-Christophe**
**BREVALEX**
**3, rue du Docteur Lancereaux**
**75008 Paris (FR)**

(54) **Système de télécommunication à adaptation de liaison**

(57)     L'invention concerne un système de télécommunication sans fil comprenant un émetteur et un récepteur, ledit émetteur étant adapté à transmettre des paquets de données à destination du récepteur, ledit récepteur comprenant des moyens de détection d'erreur (220) pour détecter si un paquet reçu est erroné, et comprenant en outre des moyens de détection de coupure (225) pour déterminer, en cas de détection de paquet erroné, si le canal de transmission entre l'émetteur et le récepteur est en situation de coupure et pour transmettre un premier signal ( *OUTAGE* ) indicatif de cette situation, l'émetteur étant adapté à modifier les conditions de transmission en réponse audit premier signal.

FIG. 1

EP 1 936 852 A1

**Description**

## DOMAINE TECHNIQUE

La présente invention concerne le domaine des systèmes de télécommunication sans fil et plus particulièrement des systèmes de télécommunication avec adaptation de liaison.

## ÉTAT DE LA TECHNIQUE ANTÉRIEURE

Dans un système de télécommunication sans fil, la qualité du signal reçu par un terminal dépend d'un grand nombre de facteurs. Afin de maximiser le débit de transmission et la capacité globale du système, le signal transmis à destination et en provenance d'un terminal est généralement modifié pour tenir compte des variations de la qualité de ce signal. Ce mécanisme de modification est connu sous la dénomination d'adaptation de liaison *(Link Adaptation).*
Un moyen bien connu pour adapter une liaison dans un système de télécommunication sans fil est d'utiliser une modulation et un codage adaptatifs ou AMC (Adaptive *Modulation and Coding)* autrement dit de sélectionner un schéma de codage et de modulation, MCS *(Modulation and Coding Scheme)* en fonction de la qualité du canal. Ce moyen est notamment mis en oeuvre dans la couche physique des systèmes EDGE, HIPERLAN/2 ou 3GPP. Typiquement, pour un faible rapport signal à bruit sur le canal de transmission, on opte pour un code à faible rendement (c'est-à-dire à taux de redondance élevé) et/ou à faible degré de modulation (c'est-à-dire une constellation de modulation de faible taille). A l'inverse, si le canal de transmission présente un rapport signal à bruit élevé, le débit est maximisé en choisissant un code à fort rendement et un degré de modulation élevé. Le rapport signal à bruit SNR (pour *Signal to Noise Ratio)* ou signal à bruit plus interférence, SNIR (pour *Signal to Noise and Interference Ratio)* est déterminé par le récepteur à partir du taux d'erreur binaire ou du taux d'erreur paquet.
Un second moyen d'adaptation d'une liaison sans fil, permettant de combattre les évanouissements *(channel fading)* sur le canal de transmission, est de recourir à un mécanisme de requête de retransmission hybride ou HARQ *(Hybrid Automatic Repeat reQuest*). Il existe actuellement plusieurs versions de protocole HARQ.
La version la plus simple, dénommée HARQ Type I, combine les avantages de la correction d'erreurs ou FEC *(Forward Error Correction)* et ceux du protocole ARQ classique en encodant un bloc de données d'information avec un code de détection d'erreurs (CRC) et un code de correction d'erreurs (ECC). S'il est détecté un nombre d'erreurs telles que le code ECC ne puisse les corriger, une requête de retransmission du bloc erroné est envoyée à l'émetteur et une seconde tentative de transmission a lieu. En pratique le bloc erroné n'est pas supprimé mais est stocké dans un buffer pour être combiné *(Chase combining)* avec le bloc reçu à la seconde tentative. Le résultat de la combinaison est soumis au décodeur.
Une seconde version de protocole HARQ, dénommée HARQ Type II ou IR HARQ *(Incremental Redundancy HARQ)* permet de réduire la taille des paquets retransmis. Selon cette version, lors de la première transmission du bloc, le code est poinçonné de telle sorte que peu de bits de redondance sont transmis. Si le bloc reçu lors de la première transmission se révèle erroné et ne peut être corrigé à l'aide des bits de redondance disponibles, des bits de redondance supplémentaires, éliminés lors du poinçonnage, sont transmis en réponse à la première requête de retransmission. Le processus peut se répéter, les bits de redondance étant transmis de manière incrémentale, au fur et à mesure des demandes de retransmission, tant que le bloc erroné ne peut être corrigé.
En outre, le schéma d'adaptation AMC au niveau de la couche physique peut être combiné avec un mécanisme HARQ au niveau de la couche liaison. On parle alors de mécanisme d'adaptation inter-couche *(cross-layer design).* Dans un tel cas, une première adaptation est effectuée au niveau de la couche physique grâce au choix du code et de la constellation de modulation en fonction du taux d'erreur paquet, PER, mesuré par le récepteur. Une seconde adaptation, plus fine, est réalisée au niveau de la couche de liaison par l'envoi de requêtes de retransmission. L'architecture inter-couche permet de réduire le nombre de schémas MCS du mécanisme d'adaptation AMC. On trouvera un exemple d'adaptation inter-couche dans l'article de E. Calvanese Strinati et al. intitulé « Performance evaluation of some hybrid ARQ schemes in IEEE 802.11a networks » publié dans Proceedings of the IEEE Vehicular Technology Conference, Spring, vol. 4, pages 2735-2739, avril 2003.
Enfin d'autres mécanismes d'adaptation de liaison peuvent être envisagés dans une configuration multi-accès, au moyen d'une allocation dynamique des ressources d'accès *(scheduling),* que ce soit en termes de puissance de transmission, d'intervalle de transmission de fréquence de transmission ou encore de code d'accès dans un système CDMA. Cette politique d'allocation permet aux utilisateurs, et plus généralement aux services, requérant une qualité de service plus élevée, de bénéficier des canaux de transmission de meilleure qualité.
Les méthodes d'adaptation précitées s'appliquent notamment à un système de télécommunication sans fil dont les canaux radio sont sélectifs en fréquence. On entend par canal sélectif en fréquence, un canal présentant une largeur de bande de cohérence plus étroite que la bande passante du signal transmis.
La plupart de ces méthodes d'adaptation font appel à la mesure du taux d'erreur paquet (PER) ou d'erreur

**EP 1 936 852 A1**

binaire (BER) par le récepteur pour estimer la qualité de la liaison. Or, il arrive que le taux d'erreur paquet soit surestimé ou au contraire, de manière plus critique, sous-estimé. Dans le premier cas, le schéma MCS sélectionné pour la liaison physique sera plus robuste que nécessaire, ce qui conduira à une sous-exploitation de la capacité du canal. Dans le second cas, le schéma MCS sélectionné peut s'avérer très insuffisant pour permettre une transmission satisfaisante sur le canal. On parle alors d'adaptation catastrophique. Par exemple, si le mécanisme d'adaptation est de type HARQ, on aura alors des demandes de retransmission répétées qui pénaliseront sévèrement le débit de transmission. Cette situation peut durer pendant l'intervalle de temps séparant deux mesures de PER successives, choisi généralement inférieur au temps de cohérence du canal. Ce dernier peut toutefois être relativement long dans un WLAN et le défaut d'adaptation prolongé qui en résulte risque d'être incompatible avec la contrainte de qualité de service (QoS) imposée par les couches supérieures.

Une situation d'adaptation catastrophique intervient fréquemment lorsque le canal n'est pas ergodique, par exemple si le canal est de type à évanouissements par blocs *(block fading channel).* En effet, dans un tel cas, un paquet de données ne « voit » qu'un nombre limité d'instances du canal, chaque instance correspondant à un bloc du paquet. La sélection du schéma MCS est effectuée sur la base d'une prédiction du rapport signal à bruit, à partir du taux d'erreur mesuré par le récepteur. Cette prédiction fait généralement appel à des tables statistiques obtenues en faisant une moyenne sur toutes les instances possibles du canal. Ainsi, en pratique, le schéma MCS sélectionné pour une trame a peu de chances de correspondre au rapport signal à bruit réel lors de la transmission de cette trame, avec les risques d'adaptation catastrophique mentionnés plus haut.

Le but de la présente invention est de proposer un système de télécommunication sans fil capable de détecter et de remédier à une situation d'adaptation catastrophique pour un canal non ergodique.

## EXPOSÉ DE L'INVENTION

La présente invention est définie par un système de télécommunication sans fil comprenant un émetteur et un récepteur, ledit émetteur étant adapté à transmettre des paquets de données à destination du récepteur, ledit récepteur comprenant des moyens de détection d'erreur pour détecter si un paquet reçu est erroné, dans lequel ledit récepteur comprend en outre des moyens de détection de coupure pour déterminer, en cas de détection de paquet erroné, si le canal de transmission entre l'émetteur et le récepteur est en situation de coupure et pour transmettre un premier signal indicatif de cette situation, l'émetteur étant adapté à modifier les conditions de transmission en réponse audit premier signal.

Avantageusement, la situation de coupure est établie lorsque l'information mutuelle instantanée du canal est supérieure au débit binaire de transmission.

Chaque paquet étant divisé en blocs et chaque bloc correspondant à une instance du canal, l'information mutuelle instantanée du canal est calculée comme l'information mutuelle moyenne sur les blocs d'un paquet.

Le débit binaire de transmission est calculé comme $R = \dfrac{k}{n} \log Q$ où $k$ et $n$ sont respectivement la dimension et la longueur du code correcteur d'erreur codant lesdites données et $Q$ est le degré de la modulation binaire à symbole utilisée pour transmettre lesdites données.

Selon une première variante, l'émetteur est adapté à sélectionner le schéma de codage et de modulation le plus robuste parmi une pluralité de schémas disponibles, lorsque le canal est en situation de coupure.

Selon une seconde variante, l'émetteur utilise une ressource d'accès parmi une pluralité de ressources d'accès pour transmettre lesdites données au récepteur et il sélectionne une nouvelle ressource d'accès parmi ladite pluralité lorsque le canal est en situation de coupure.

Lesdites ressources d'accès sont des fréquences de transmission, des intervalles de temps de transmission, des codes orthogonaux ou des combinaisons de ces ressources.

Avantageusement, lesdits moyens de détection d'erreur sont adaptés à transmettre un second signal pour acquitter la bonne réception ou indiquer une réception défectueuse selon que le paquet reçu est sans erreur ou erroné.

Si le second signal indique une réception défectueuse, l'émetteur est avantageusement adapté :

à retransmettre ledit paquet erroné avec le même schéma de codage et de modulation avec lequel il a été précédemment transmis, si le canal n'est pas en situation de coupure ; et
à sélectionner le schéma de codage et de modulation le plus robuste parmi une pluralité de schémas disponibles, et à retransmettre ledit paquet erroné avec le schéma ainsi sélectionné, lorsque le canal est en situation de coupure.

Alternativement, si le second signal indique une réception défectueuse, l'émetteur est adapté à transmettre :

certains des bits de redondance éliminés lors d'une étape de poinçonnage du code correcteur d'erreur ayant servi à coder ledit paquet lors de la précédente transmission, si le canal n'est pas en situation de coupure ;

la totalité des bits de redondance éliminés lors d'une étape de poinçonnage du code correcteur d'erreur ayant servi à coder ledit paquet lors de la précédente transmission, si le canal est en situation de coupure.

L'invention concerne également un récepteur pour système de télécommunication sans fil, ledit récepteur comprenant des moyens de détection d'erreur pour détecter si un paquet reçu d'un émetteur est erroné, ledit récepteur comprenant en outre des moyens de détection de coupure pour déterminer, en cas de détection de paquet erroné, si le canal de transmission entre l'émetteur et le récepteur est en situation de coupure et pour transmettre à l'émetteur un premier signal indicatif de cette situation.

Avantageusement, lesdits moyens de détection de coupure détectent une situation de coupure si l'information mutuelle instantanée du canal est supérieure au débit binaire de transmission.

Chaque paquet étant divisé en blocs et chaque bloc correspondant à une instance du canal, lesdits moyens de détection de coupure calculent l'information mutuelle instantanée comme l'information mutuelle moyenne sur les blocs d'un paquet.

Le débit binaire de transmission est obtenu comme $R = \dfrac{k}{n}\log Q$ où $k$ et $n$ sont respectivement la dimension et la longueur du code correcteur d'erreur codant lesdites données et $Q$ est le degré de la modulation binaire à symbole utilisée pour transmettre lesdites données.

Avantageusement, lesdits moyens de détection de coupure estiment l'information mutuelle instantanée à partir de :

$$I_{inst} = \frac{\gamma}{n_c} \sum_{i=1}^{n_c} |h_i|^2$$

où $\gamma$ est le rapport signal à bruit, $n_c$ le nombre de blocs dans un paquet et $h_i$, $i=1,..n_c$ les coefficients d'atténuation du canal de transmission affectant respectivement les blocs dudit paquet.

Alternativement, lesdits moyens de détection de coupure estiment l'information mutuelle instantanée à partir de :

$$I_{inst} = \frac{1}{n_c} \sum_{i=1}^{n_c} I_i$$

avec

$$I_i = \log Q - \frac{1}{Q} \sum_{k=1}^{Q} E_z \left\{ \log \left( \sum_{q=1}^{Q} \exp \left[ -\frac{|h_i a_k + z - h_i a_q|^2 - |z|^2}{2\sigma^2} \right] \right) \right\}$$

où les $a_q=1,..,Q$ sont les symboles de l'alphabet de modulation, $n_c$ est le nombre de blocs d'un paquet, $h_i$, $i=1,..n_c$ sont les coefficients d'atténuation du canal de transmission affectant respectivement les blocs dudit paquet, $z = N(0,\sigma^2)$ la variable aléatoire décrivant le bruit et $E_z(.)$ est l'espérance sur les échantillons de bruit.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente de manière schématique le fonctionnement d'un système de télécommunication sans fil selon un mode de réalisation de l'invention ;

La Fig. 2 représente de manière schématique la structure d'un récepteur destiné à être utilisé dans le système de télécommunication de la Fig. 1.

## EXPOSÉ DÉTAILLÉ DE MODES DE RÉALISATION PARTICULIERS

Nous considérerons dans la suite un système de télécommunication sans fil transmettant sur un canal non ergodique, par exemple un canal à évanouissements par blocs. Sans perte de généralité, nous supposerons que le système transmet des paquets de données sur ce canal, chaque paquet étant schématiquement divisé en $n_c$ blocs, chaque bloc correspondant à une instance du canal. Une instance de canal est caractérisée par une valeur complexe de coefficient d'atténuation. La partition du paquet en blocs ne préjuge pas de la manière dont les bits sont transmis. Ainsi un bloc pourra correspondre à un ensemble de porteuses contiguës d'un symbole OFDM ou bien à un intervalle temporel : dans le premier cas la réponse du canal est constante par bandes spectrales, dans le second par intervalles temporels. Un bloc pourra encore être défini conjointement par une bande spectrale et un intervalle temporel.

Les coefficients peuvent être compris comme le résultat de $n_c$ tirages d'une variable aléatoire, par exemple ayant une loi de distribution de Rayleigh. On notera **h** le vecteur des coefficients d'atténuation $h_i$, $i = 1,..,n_c$.

La capacité au sens de Shannon, exprimée comme moyenne de l'information mutuelle sur toutes les instances du canal, n'est pas une grandeur pertinente pour caractériser un canal non ergodique. Comme indiqué dans l'article d'E. Bigileri et al. intitulé « Fading channels : information-theoretic and communication aspects » publié dans IEEE Trans. on Information Theory, vol. 44, n° 6, Oct. 1998, pages 2619-2692, il est alors préférable de caractériser ce canal par une probabilité de coupure *(outage probability)*. Il y a coupure lorsque la capacité associée à l'instance du canal est inférieure au taux de transmission binaire de la source.

La probabilité de coupure dépend du rapport signal à bruit $\gamma$ et du taux binaire de transmission $R$ de la source, soit :

$$P_{out}(\gamma, R) = \mathrm{Pr}\big(I(X,Y) < R\big) \qquad (1)$$

Par exemple, pour un code correcteur $(n,k,d_{min})$ et un alphabet de modulation binaire à symbole de cardinal $Q$, le taux binaire de transmission vaut $R = \dfrac{k}{n} \log Q$. On rappelle qu'un code noté conventionnellement $(n,k,d_{min})$ est un code de longueur $n$, de dimension $k$ et de distance minimale $d_{min}$. La quantité $n\text{-}k$ indique le degré de redondance du code.

La probabilité de coupure peut être considérée comme la probabilité que l'information mutuelle « instantanée » du canal, vue par un paquet, soit inférieure au taux binaire de transmission. Si celle-ci est inférieure à ce taux, il ne sera pas possible de corriger les erreurs affectant un paquet. En revanche, en faisant un parallèle avec le théorème fondamental de Shannon, si l'information mutuelle « instantanée » du canal est supérieure à ce taux, il sera toujours possible d'utiliser un code correcteur permettant de transmettre les données avec une probabilité d'erreur arbitrairement faible.

L'information mutuelle « instantanée » du canal, c'est-à-dire, « observée » pendant la transmission d'un paquet, peut être évaluée au moyen de :

$$I_{inst} = \frac{1}{n_c} \sum_{i=1}^{n_c} I_i \qquad (2)$$

où $I_i$ est l'information mutuelle moyenne calculée sur le bloc $i$. Le comportement du canal sur un bloc peut être considéré, au coefficient multiplicatif $h_i$ près, comme étant de type BBAG (c'est-à-dire à Bruit Blanc Additif Gaussien).

Le récepteur connaissant les coefficients $h_i$ grâce à la détection de symboles pilotes et le démodulateur symbole $Q$-aire à bits fournissant une estimation de la variance de bruit $\sigma^2$, on peut montrer que l'information mutuelle moyenne $I_i$ s'exprime alors par :

$$I_i = \log Q - \frac{1}{Q}\sum_{k=1}^{Q} E_z\left\{\log\left(\sum_{q=1}^{Q}\exp\left[-\frac{|h_i a_k + z - h_i a_q|^2 - |z|^2}{2\sigma^2}\right]\right)\right\} \qquad (3)$$

où les $a_q$=1,..,Q sont les symboles de l'alphabet de modulation, $z = N(0,\sigma^2)$ la variable aléatoire décrivant le bruit et $E_z$ (.) est l'espérance sur les échantillons de bruit.

Au lieu d'estimer l'information mutuelle « instantanée » du canal à partir de (2) et (3), il est possible de l'évaluer empiriquement de manière approchée par :

$$I_{inst} = \frac{\gamma}{n_c}\sum_{i=1}^{n_c}|h_i|^2 \qquad (4)$$

Comme déjà indiqué plus haut si $I_{inst}$ telle qu'obtenue par (2) et (3), ou (4) est inférieure au débit de transmission $R$, le canal sera en situation de coupure et les erreurs affectant les données d'une trame ne seront pas en mesure d'être toutes corrigées.

L'idée à la base de l'invention est de permettre au récepteur de diagnostiquer une situation de coupure et d'en avertir l'émetteur, par exemple à l'aide d'un bit de signalisation. Ce dernier prendra alors des mesures particulières d'adaptation de la liaison pour éviter une situation d'adaptation catastrophique.

Selon un premier mode de réalisation, le récepteur calcule tout d'abord le CRC du paquet reçu et détermine si le paquet est erroné. Dans l'affirmative, le récepteur évalue l'information mutuelle « instantanée » selon (2) et (3), ou bien (4) pour le paquet et la compare au débit de transmission $R$. Si une coupure du canal est diagnostiquée, le récepteur en avertit l'émetteur. Ce dernier adopte pour la transmission suivante le schéma MCS le plus robuste, c'est-à-dire celui qui correspond au débit de transmission le plus faible, $R_{min}$, en escomptant que $I_{inst} > R_{min}$ soit vérifiée pour cette transmission. En absence de coupure du canal, le récepteur indique à l'émetteur le niveau courant du rapport signal à bruit et celui-ci détermine à l'aide d'une table le schéma MCS le plus approprié, selon un mécanisme d'adaptation AMC classique.

Selon un second mode de réalisation de l'invention, le système de télécommunication sans fil met en oeuvre un mécanisme d'adaptation de type IR HARQ.

Le récepteur détermine si un paquet reçu est erroné à partir d'un calcul de CRC. Dans la négative, le récepteur transmet un signal d'acquittement *ACK* . Dans l'affirmative, le récepteur transmet à l'émetteur un signal de réception défectueuse *NACK* et vérifie si $I_{inst} > \frac{k}{n_P}\log Q$ , où $n_P$ est le nombre de bits du code poinçonné. Si l'inégalité est vérifiée, il y a coupure du canal. L'émetteur retransmet alors d'emblée la totalité des bits éliminés lors de l'étape de poinçonnage en escomptant que $I_{inst} > \frac{k}{n}\log Q$ à la prochaine transmission. En revanche, s'il n'y a pas coupure, les bits de redondance sont transmis de manière incrémentale à chaque nouvelle requête de retransmission comme selon un mécanisme IR HARQ classique, autrement dit seuls certains des bits éliminés sont transmis à chaque requête.

Selon un troisième mode de réalisation préféré de l'invention, le système de télécommunication sans fil met en oeuvre un mécanisme inter-couche d'adaptation de liaison.

Le récepteur calcule tout d'abord le CRC du paquet reçu. Si le paquet est dépourvu d'erreur, un signal d'acquittement *ACK* est transmis à l'émetteur pour indiquer la bonne réception du paquet. En revanche, si le paquet est erroné, le récepteur détermine comme précédemment, par comparaison entre l'information mutuelle instantanée $I_{inst}$ et le débit de transmission $R$ si le canal est en situation de coupure. Si c'est effectivement le cas, il envoie à l'émetteur à la fois un signal de réception défectueuse *NACK* et un signal de coupure de canal *OUTAGE.* L'émetteur retransmet alors le paquet en question en sélectionnant le schéma MCS le plus robuste, c'est-à-dire celui correspondant au débit de transmission le plus faible, $R_{min}$ parmi les schémas disponibles.

En revanche, si le canal n'est pas en situation de coupure, le récepteur transmet le signal de capacité de canal suffisante *NOUTAGE* avec celui de réception défectueuse *NACK.*

Selon une première variante (HARQ type I), l'émetteur renvoie le paquet en question avec le même schéma MCS. Les paquets successivement reçus sont avantageusement combinés avant d'être transmis au décodeur. Le processus peut être réitéré en cas d'échec.

Selon une seconde variante, l'émetteur renvoie le paquet en question mais avec un schéma MCS plus robuste, c'est-à-dire une constellation de plus faible degré de modulation, et/ou de débit de codage plus faible, c'est-à-dire de redondance plus élevée. Ce processus peut être réitéré en cas d'échec. On réduit ainsi à chaque tentative le débit de transmission.

Selon une troisième variante (HARQ type II), seuls certains des bits redondants éliminés par l'étape de poinçonnage lors de la première transmission sont émis. Si les erreurs ne peuvent être corrigées par le code correcteur à l'aide de ces bits additionnels (sans toutefois que le canal soit en situation de coupure) le processus est réitéré comme dans un schéma IR HARQ classique.

Selon un quatrième mode de réalisation, le système de télécommunication utilise une allocation dynamique de ressources d'accès aux différents utilisateurs. Ces ressources d'accès peuvent être des fréquences, des bandes de fréquence, des intervalles de transmission, des codes orthogonaux, ou encore des combinaisons des ressources précitées. Un cas particulier d'intérêt relatif aux bandes de fréquence concerne un système de télécommunication OFDM. Dans un tel système les ressources d'accès peuvent être des intervalles de fréquences porteuses du multiplex OFDM. Pour une instance de canal donné, certains intervalles de fréquences porteuses peuvent être affectés par un évanouissement alors que d'autres intervalles ne le sont pas.

Si le récepteur détecte un paquet erroné au moyen du CRC et s'il détermine que le canal est en situation de coupure, il transmet comme précédemment un signal de non acquittement *NACK* ainsi qu'un signal de coupure de canal *OUTAGE.* L'émetteur, en pratique la station de base, alloue alors une nouvelle ressource d'accès à l'utilisateur affecté par la coupure de canal. Le paquet erroné peut être retransmis à l'aide de la ressource nouvellement allouée à l'utilisateur ou bien une reprise sur erreur peut être effectuée à un niveau de protocole supérieur. La ressource d'accès correspondant au canal en situation de rupture peut être ultérieurement réallouée, le cas échéant après un délai de sécurité.

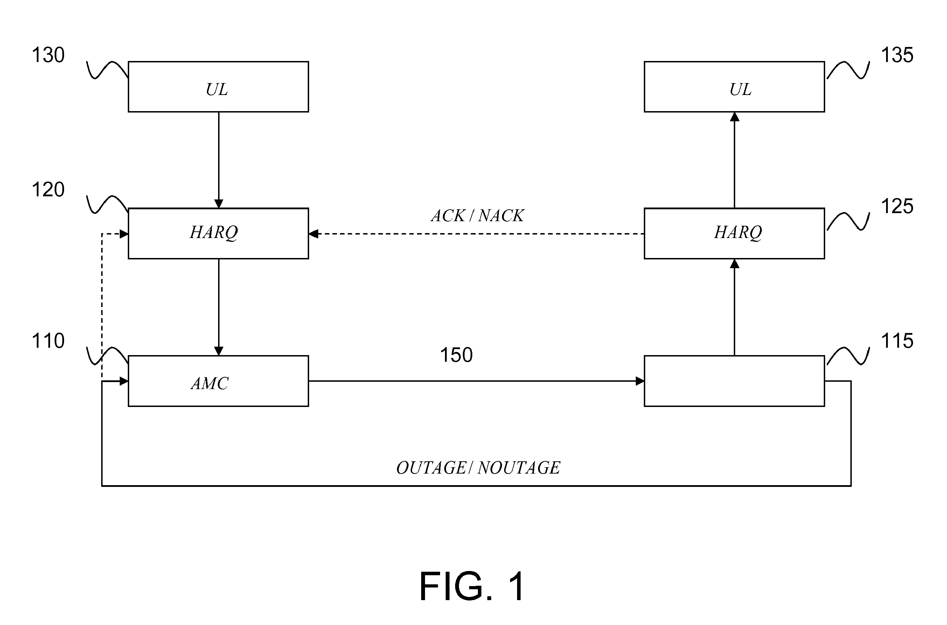

La Fig. 1 illustre schématiquement le fonctionnement d'un système de télécommunication selon un mode de réalisation de l'invention. On a représenté en 110, 120, 130 respectivement la couche physique, la couche liaison et une couche supérieure *UL* du côté de l'émetteur. Les références 115, 125 et 135 indiquent les mêmes couches du côté du récepteur.

L'émetteur transmet des paquets de données sur un canal non ergodique 150, après codage et modulation adaptatifs AMC en 110.

Le récepteur reçoit en 115 lesdits paquets et, en cas d'erreur(s) détectée(s), teste si le canal est en situation de coupure. Le signal *OUTAGE/NOUTAGE* correspondant est transmis à l'émetteur. En outre dans les modes de réalisation utilisant un mécanisme HARQ (second et troisième modes de réalisation précités), un signal d'acquittement/défaut d'acquittement du paquet *ACK/NACK* est également envoyé à l'émetteur.

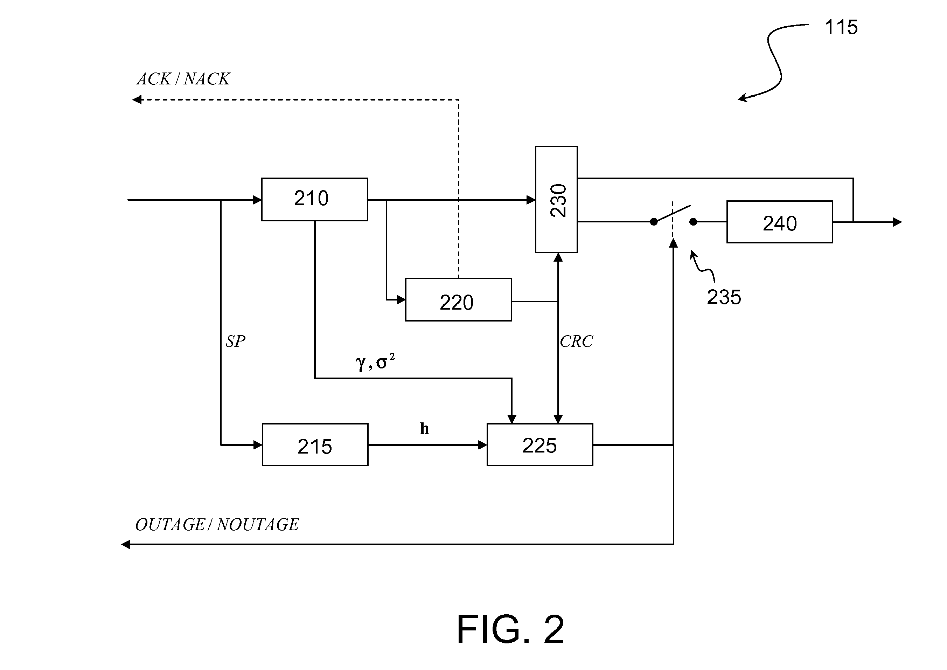

La Fig. 2 représente schématiquement la structure d'un récepteur selon l'invention destiné à être utilisé dans le système de télécommunication de la Fig. 1.

Les symboles reçus par le récepteur 115 sont démodulés dans le démodulateur symbole à binaire 210. Le ou les mots de codes constituant le paquet de données sont ensuite soumis à des moyens de calcul de CRC 220. Ces moyens déterminent si le paquet est erroné et transmettent cette information au multiplexeur 230 ainsi qu'aux moyens de détection de coupure de canal 225. Si le paquet est dépourvu d'erreur, il est transmis directement sur la sortie. Sinon, il est transmis aux moyens de commutation 235. Les moyens de calcul 220 informent également par un signal *ACK/NACK* si le paquet reçu est erroné ou non.

L'estimateur de canal 215 estime les coefficients d'atténuation $h_i$ à partir des symboles pilotes *SP* et les transmet aux moyens 225. Ces derniers reçoivent également du démodulateur 210, l'estimation du rapport signal à bruit $\gamma$ et/ou de la puissance de bruit $\sigma^2$ et calculent à l'aide des expressions (2) et (3) ou bien (4) l'information mutuelle moyenne sur les blocs du paquet, c'est-à-dire l'information mutuelle « instantanée » $I_{inst}$. Les moyens 225 connaissent également le schéma MCS utilisé à l'émission (par exemple au moyen d'un canal de signalisation) et en déduisent le taux binaire de transmission *R.* Les moyens 225 testent si $R > I_{inst}$ et avertissent l'émetteur par le signal *OUTAGE/NOUTAGE.* Ce même signal commande les moyens de commutation 235. Selon que le canal est en situation de coupure ou non, les moyens de commutation inhibent ou transmettent le paquet erroné au décodeur ECC. L'opération de décodage ne sera ainsi pas effectuée inutilement, puisqu'en situation de coupure, cette dernière serait vouée à l'échec.

## Revendications

**1.** Système de télécommunication sans fil comprenant un émetteur et un récepteur, ledit émetteur étant adapté à transmettre des paquets de données à destination du récepteur, ledit récepteur comprenant des moyens de détection d'erreur (220) pour détecter si un paquet reçu est erroné, **caractérisé en ce que** ledit récepteur comprend en outre des moyens de détection de coupure (225) pour déterminer, en cas de détection de paquet erroné, si le canal de transmission entre l'émetteur et le récepteur est en situation de coupure et pour transmettre un premier signal *(OUTAGE)* indicatif de cette situation, l'émetteur étant adapté à modifier les conditions de transmission en réponse audit premier signal.

**2.** Système de télécommunication selon la revendication 1, **caractérisé en ce que** la situation de coupure est établie lorsque l'information mutuelle instantanée du canal est supérieure au débit binaire de transmission.

**3.** Système de télécommunication selon la revendication 2, **caractérisé en ce que**, chaque paquet étant divisé en blocs et chaque bloc correspondant à une instance du canal, l'information mutuelle instantanée du canal est calculée comme l'information mutuelle moyenne sur les blocs d'un paquet.

**4.** Système de télécommunication selon la revendication 2, **caractérisé en ce que** le débit binaire de transmission est calculé comme $R = \dfrac{k}{n} \log Q$ où $k$ et $n$ sont respectivement la dimension et la longueur du code correcteur d'erreur codant lesdites données et $Q$ est le degré de la modulation binaire à symbole utilisée pour transmettre lesdites données.

**5.** Système de télécommunication selon l'une des revendications précédentes, **caractérisé en ce que** l'émetteur est adapté à sélectionner le schéma de codage et de modulation le plus robuste parmi une pluralité de schémas disponibles, lorsque le canal est en situation de coupure.

**6.** Système de télécommunication selon l'une des revendications 1 à 4, **caractérisé en ce que** l'émetteur utilise une ressource d'accès parmi une pluralité de ressources d'accès pour transmettre lesdites données au récepteur et qu'il sélectionne une nouvelle ressource d'accès parmi ladite pluralité lorsque le canal est en situation de coupure.

**7.** Système de télécommunication selon la revendication 6, **caractérisé en ce que** lesdites ressources d'accès sont des fréquences de transmission, des intervalles de temps de transmission, des codes orthogonaux ou des combinaisons de ces ressources.

**8.** Système de télécommunication selon l'une des revendications 1 à 4, **caractérisé en ce que** lesdits moyens de détection d'erreur sont adaptés à transmettre un second signal (*ACK*/*NACK*) pour acquitter la bonne réception ou indiquer une réception défectueuse selon que le paquet reçu est sans erreur ou erroné.

**9.** Système de télécommunication selon la revendication 8, **caractérisé en ce que**, si le second signal indique une réception défectueuse,
l'émetteur est adapté à retransmettre ledit paquet erroné avec le même schéma de codage et de modulation avec lequel il a été précédemment transmis, si le canal n'est pas en situation de coupure ; et
à sélectionner le schéma de codage et de modulation le plus robuste parmi une pluralité de schémas disponibles, et à retransmettre ledit paquet erroné avec le schéma ainsi sélectionné, lorsque le canal est en situation de coupure.

**10.** Système de télécommunication selon la revendication 8, **caractérisé en ce que**, si le second signal indique une réception défectueuse, l'émetteur est adapté à transmettre :

certains des bits de redondance éliminés lors d'une étape de poinçonnage du code correcteur d'erreur ayant servi à coder ledit paquet lors de la précédente transmission, si le canal n'est pas en situation de coupure ;
la totalité des bits de redondance éliminés lors d'une étape de poinçonnage du code correcteur d'erreur ayant servi à coder ledit paquet lors de la précédente transmission, si le canal est en situation de coupure.

**11.** Récepteur pour système de télécommunication sans fil, ledit récepteur comprenant des moyens de détection d'erreur (220) pour détecter si un paquet reçu d'un émetteur est erroné, **caractérisé en ce que** ledit récepteur comprend en outre des moyens de détection de coupure (225) pour déterminer, en cas de détection de paquet erroné, si le canal de transmission entre l'émetteur et le récepteur est en situation de coupure et pour transmettre à l'émetteur un premier signal *(OUTAGE)* indicatif de cette situation.

**12.** Récepteur selon la revendication 11, **caractérisé en ce que** lesdits moyens de détection de coupure détectent une situation de coupure si l'information mutuelle instantanée du canal est supérieure au débit binaire de transmission.

**13.** Récepteur selon la revendication 12, **caractérisé en ce que**, chaque paquet étant divisé en blocs et chaque bloc correspondant à une instance du canal, lesdits moyens de détection de coupure calculent l'information mutuelle instantanée comme l'information mutuelle moyenne sur les blocs d'un paquet.

**14.** Récepteur selon la revendication 12, **caractérisé en ce que** le débit binaire de transmission est obtenu comme

$$R = \frac{k}{n} \log Q$$ où $k$ et $n$ sont respectivement la dimension et la longueur du code correcteur d'erreur codant lesdites données et $Q$ est le degré de la modulation binaire à symbole utilisée pour transmettre lesdites données.

**15.** Récepteur selon les revendications 13 et 14, **caractérisé en ce que** lesdits moyens de détection de coupure estiment l'information mutuelle instantanée à partir de :

$$I_{inst} = \frac{\gamma}{n_c} \sum_{i=1}^{n_c} |h_i|^2$$

où $\gamma$ est le rapport signal à bruit, $n_c$ le nombre de blocs dans un paquet et $h_i$, $i=1,..n_c$ les coefficients d'atténuation du canal de transmission affectant respectivement les blocs dudit paquet.

**16.** Récepteur selon les revendications 13 et 14, **caractérisé en ce que** lesdits moyens de détection de coupure estiment l'information mutuelle instantanée à partir de :

$$I_{inst} = \frac{1}{n_c} \sum_{i=1}^{n_c} I_i$$

avec

$$I_i = \log Q - \frac{1}{Q} \sum_{k=1}^{Q} E_z \left\{ \log \left( \sum_{q=1}^{Q} \exp \left[ -\frac{|h_i a_k + z - h_i a_q|^2 - |z|^2}{2\sigma^2} \right] \right) \right\}$$

où les $a_q=1,..,Q$ sont les symboles de l'alphabet de modulation, $n_c$ est le nombre de blocs d'un paquet, $h_i$, $i =1,..n_c$ sont les coefficients d'atténuation du canal de transmission affectant respectivement les blocs dudit paquet, $z = N$ $(0,\sigma^2)$ la variable aléatoire décrivant le bruit et $E_z(.)$ est l'espérance sur les échantillons de bruit.

FIG. 1

FIG. 2

# EP 1 936 852 A1

**Office européen des brevets**

## RAPPORT DE RECHERCHE EUROPEENNE

Numéro de la demande

EP 07 12 3402

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 638 239 A (CIT ALCATEL [FR]) 22 mars 2006 (2006-03-22) * figure 3 * * alinéas [0006], [0007], [0029], [0021] * | 1-16 | INV. H04L1/00 H04L1/16 H04L1/18 H04L1/20 |
| X | CHENG J-F ET AL: "Adaptive incremental redundancy [WCDMA systems]" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 octobre 2003 (2003-10-06), pages 737-741Vol2, XP010700812 ISBN: 0-7803-7954-3 * page 738 - page 739 * | 1-16 | |
| D,A | STRINATI E C ET AL: "Performance evaluation of some hybrid ARQ schemes in IEEE 802.11a networks" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003, IEEE VEHICULAR TECHNOLGY CONFERENCE, NEW YORK, NY : IEEE, US, vol. VOL. 4 OF 4. CONF. 57, 22 avril 2003 (2003-04-22), pages 2735-2739, XP010862359 ISBN: 0-7803-7757-5 * le document en entier * | 1-16 | DOMAINES TECHNIQUES RECHERCHES (IPC)<br><br>H04L |
| D,A | EZIO BIGLIERI ET AL: "Fading Channels: Information-Theoretic and Communications Aspects" IEEE TRANSACTIONS ON INFORMATION THEORY, IEEE SERVICE CENTER, PISCATAWAY, NJ, US, vol. 44, no. 6, octobre 1998 (1998-10), XP011027166 ISSN: 0018-9448 * le document en entier * | 1-16 | |

Le présent rapport a été établi pour toutes les revendications

| Lieu de la recherche | Date d'achèvement de la recherche | Examinateur |
|---|---|---|
| La Haye | 30 janvier 2008 | Borges, Pedro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 12 3402

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-01-2008

| Document brevet cité au rapport de recherche | Date de publication | Membre(s) de la famille de brevet(s) | Date de publication |
|---|---|---|---|
| EP 1638239 A | 22-03-2006 | US 2006064625 A1 | 23-03-2006 |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **E. CALVANESE STRINATI et al.** Performance evaluation of some hybrid ARQ schemes in IEEE 802.11a networks. *Proceedings of the IEEE Vehicular Technology Conference, Spring,* Avril 2003, vol. 4, 2735-2739

- **E. BIGILERI et al.** Fading channels : information-theoretic and communication aspects. *IEEE Trans. on Information Theory,* Octobre 1998, vol. 44 (6), 2619-2692